# EUROPÄISCHE PATENTSCHRIFT

(11) **EP 1 617 263 B1**
(45) Veröffentlichungstag und Bekanntmachung des Hinweises auf die Patenterteilung: **25.05.2011**
(21) Anmeldenummer: 04023512.9
(22) Anmeldetag: 01.10.2004
(51) Int. Cl.: G02B 21/00

(54) **Lichtrastermikroskop und Verwendung**
Scanning optical microscope and method of using it
Microscope optique à balayage et méthode d'utilisation

(30) Priorität: 16.07.2004 DE 102004034988
(43) Veröffentlichungstag der Anmeldung: 18.01.2006
(73) Patentinhaber: CARL ZEISS JENA GmbH, 07745 Jena (DE)
(72) Erfinder: Hecht, Frank, 99425 Weimar (DE)
(74) Vertreter: Geyer, Fehners & Partner

(56) Entgegenhaltungen:
- DE-A- 10 058 100
- DE-A- 10 257 237
- US-A- 5 386 112
- US-A1- 2002 163 717
- US-B1- 6 548 796

## Beschreibung

Die Erfindung bezieht sich auf ein Verfahren zur Lichtrastermikroskopie gemäß dem Oberbegriff des Hauptanspruches. Sie beschreibt ein Verfahren und ein Gerät, mit denen eine schnellere Abtastung von großen Proben ermöglicht wird. Das Verfahren ist besonders für Fälle geeignet, in denen die Aufnahmeregion größer als das maximale Bildfeld des Mikroskops ist.

Bei der Aufnahme von großen Proben werden derzeit mehrere Bilder oder Stapel aufgenommen wobei die Probe zwischen den Aufnahmen der Bilder oder Stapel mit einem motorisierten Probentisch verschoben werden. Die aufgenommenen Bilder oder Stapel werden anschließend in ein Gesamtbild entsprechend der Tischposition kopiert. Die Entwicklungen bzgl. der Erhöhung der Aufnahmegeschwindigkeit von Bildern und Stapeln mit konfokalen Mikroskopen hat zu der Situation geführt, daß die Tischpositionierung einen wesentlich Beitrag zur Gesamtaufnahmezeit leistet.

Aus der DE 10058100 A1 ist es bekannt, mit einem Lichtrastermikroskop eine Probe abzutasten, die größer als das Bildfeld des Mikroskops ist. Dazu werden Bilder durch x/y-Abrastern mit einer punktförmigen konfokalen Abbildung aufgenommen. Die Bilder liegen an unterschiedlichen Stellen der Probe, indem ein motorisch angetriebener Probentisch geeignet verstellt wird, und überlappen sich in einem Überlappungsbereich, der folglich zweimal abgetastet wird, was in einer Bilddatenverarbeitung für eine optimale örtliche Zuordnung der Bilder ausgenutzt wird.

Die DE 10257237 A1 beschreibt ein linienscannendes Mikroskop.

Die neue, vorgeschlagene Lösung umfaßt ein Verfahren zur Lichtrastermikroskopie gemäß dem Hauptanspruch.
Die Erfindung wird nachfolgend unter Bezugnahme auf die Zeichnungen beispielhalber noch näher erläutert. Es zeigen:
Fig. 1 eine schematische Darstellung eines Laserscanningmikroskops mit Strahlungsquellenmodul, Scanmodul sowie Detektormodul,
Fig. 2: eine schematische Darstellung eines Scanfeldes zur Veranschaulichung möglicher Zoom-Wirkungen,
Fig. 3: eine schematische Darstellung eines Laserscanningmikroskops mit einer Nipkow-Scheibe und
Fig. 4: eine schematische Darstellung eines Laserscanningmikroskops mit paralleler Mehrpunktbeleuchtung und -abtastung.

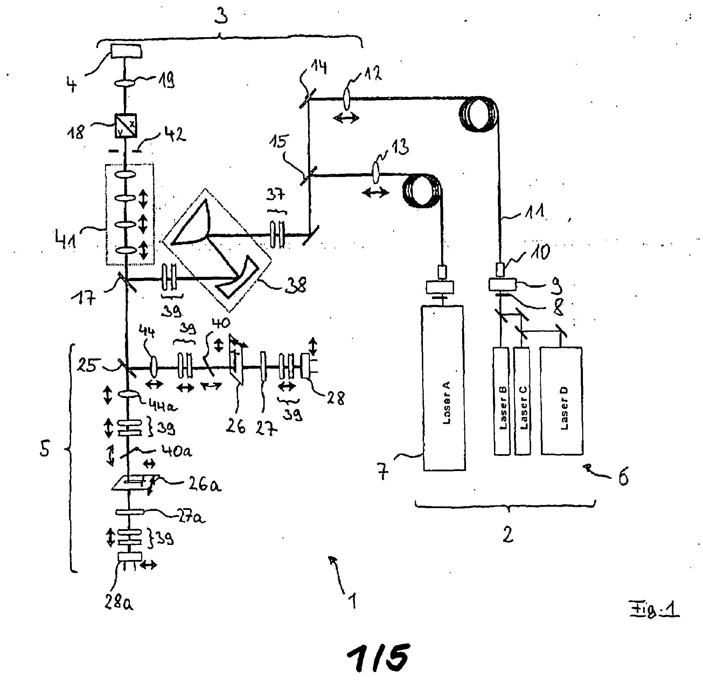

Figur 1 zeigt schematisch ein Laserscanningmikroskop 1, das im wesentlichen aus fünf Komponenten aufgebaut ist: einem Strahlungsquellenmodul 2, das Anregungsstrahlung für die Laserscanningmikroskopie erzeugt, einem Scanmodul 3, das die Anregungsstrahlung konditioniert und zum Scannen über eine Probe geeignet ablenkt, einem zur Vereinfachung nur schematisch gezeigten Mikroskopmodul 4, das die vom Scanmodul bereitgestellte scannende Strahlung in einem mikroskopischen Strahlengang auf eine Probe richtet, sowie einem Detektormodul 5, das optische Strahlung von der Probe erhält und detektiert. Das Detektormodul 5 kann dabei, wie es in Figur 1 dargestellt ist, spektral mehrkanalig ausgeführt sein.

Zur allgemeinen Beschreibung eines punktweise abtastenden Laserscanningmikroskopes wird auf die DE 19702753 A1 verwiesen, die somit Bestandteil der hier vorliegenden Beschreibung ist.

Das Strahlungsquellenmodul 2 erzeugt Beleuchtungsstrahlung, die für die Laserscanningmikroskopie geeignet ist, also insbesondere Strahlung, die Fluoreszenz auslösen kann. Je nach Applikation weist das Strahlungsquellenmodul dazu mehrere Strahlungsquellen auf. In einer dargestellten Ausführungsform werden zwei Laser 6 und 7 im Strahlungsquellenmodul 2 vorgesehen, denen jeweils ein Lichtventil 8 sowie ein Abschwächer 9 nachgeschaltet sind und die ihre Strahlung über ein Koppelstelle 10 in eine Lichtleitfaser 11 einkoppeln. Das Lichtventil 8 wirkt als Strahlablenker, mit dem eine Strahlabschaltung bewirkt werden kann, ohne den Betrieb der Laser in der Lasereinheit 6 bzw. 7 selbst abschalten zu müssen. Das Lichtventil 8 ist beispielsweise als AOTF ausgebildet, das zur Strahlabschaltung den Laserstrahl vor der Einkopplung in die Lichtleitfaser 11 in Richtung einer nicht dargestellten Lichtfalle ablenkt.

In der beispielhaften Darstellung der Figur 1 weist die Lasereinheit 6 drei Laser B, C, D auf, wohingegen die Lasereinheit 7 nur einen Laser A beinhaltet. Die Darstellung ist also beispielhaft für eine Kombination aus Einzel- und Multiwellenlängenlaser, die einzeln oder auch gemeinsam an eine oder mehrere Fasern angekoppelt sind. Auch kann die Ankopplung über mehrere Fasern gleichzeitig erfolgen, deren Strahlung später nach Durchlaufen einer Anpaßoptik durch Farbvereiniger gemischt wird. Es ist somit möglich, verschiedenste Wellenlängen oder bereiche für die Anregungsstrahlung zu verwenden.

Die in die Lichtleitfaser 11 eingekoppelte Strahlung wird mittels verschieblichen Kollimationsoptiken 12 und 13 über Strahlvereinigungsspiegel 14, 15 zusammengeführt und in einer Strahlformungseinheit hinsichtlich des Strahlprofils verändert.

Die Kollimatoren 12, 13 sorgen dafür, daß die vom Strahlungsquellenmodul 2 an das Scanmodul 3 zugeführte Strahlung in einen Unendlichstrahlengang kollimiert wird. Dies erfolgt jeweils vorteilhaft mit einer einzelnen Linse, die durch Verschiebung entlang der optischen Achse unter Steuerung (einer nicht dargestellten) zentralen Ansteuereinheit eine Fokussierungsfunktion hat, indem der Abstand zwischen Kollimator 12, 13 und dem jeweiligen Ende der Lichtleitfaser veränderbar ist.

Die Strahlformungseinheit, welche später noch eingehend erläutert wird, erzeugt aus dem rotationssymmetrischen, gaußförmig profilierten Laserstrahl, wie er nach den Strahlvereinigungsspiegeln 14, 15 vorliegt, einen zeilenförmigen Strahl, der nicht mehr rotationssymmetrisch ist, sondern im Querschnitt zur Erzeugung eines rechteckig beleuchteten Feldes geeignet ist.

Dieser auch als zeilenförmig bezeichnete Beleuchtungsstrahl dient als Anregungsstrahlung und wird über einen Hauptfarbteiler 17 und eine noch zu beschreibende Zoomoptik zu einem Scanner 18 geleitet. Auf den Hauptfarbteiler wird später ebenfalls noch eingegangen, hier sei lediglich erwähnt, daß er die Funktion hat, vom Mikroskopmodul 4 zurückkehrende Probenstrahlung von der Anregungsstrahlung zu trennen.

Der Scanner 18 lenkt den zeilenförmigen Strahl ein- oder zweiachsig ab, wonach er durch ein Scanobjektiv 19 sowie eine Tubuslinse und ein Objektiv des Mikroskopmoduls 4 in einen Fokus 22 gebündelt wird, der in einem Präparat bzw. in einer Probe liegt. Die optische Abbildung erfolgt dabei so, daß die Probe in einer Brennlinie mit Anregungsstrahlung beleuchtet wird. Derart im linienförmigen Fokus angeregte Fluoreszenz-Strahlung gelangt über Objektiv und Tubuslinse des Mikroskopmoduls 4 und das Scanobjektiv 19 zurück zum Scanner 18, so daß in Rückrichtung nach dem Scanner 18 wieder ein ruhender Strahl vorliegt. Man spricht deshalb auch davon, daß der Scanner 18 die Fluoreszenz-Strahlung descannt.

Der Hauptfarbteiler 17 läßt die in anderen Wellenlängenbereichen als die Anregungsstrahlung liegende Fluoreszenz-Strahlung passieren, so daß sie über einen Umlenkspiegel 24 im Detektormodul 5 umgelenkt und dann analysiert werden kann. Das Detektormodul 5 weist in der Ausführungsform der Figur 1 mehrere spektrale Kanäle auf, d.h. die vom Umlenkspiegel 24 kommende Fluoreszenz-Strahlung wird in einem Nebenfarbteiler 25 in zwei spektrale Kanäle aufgeteilt.

Jeder spektrale Kanal verfügt über eine Schlitzblende 26, die eine konfokale oder teil-konfokale Abbildung bezüglich der Probe 23 realisiert und deren Größe die Tiefenschärfe, mit der die Fluoreszenz-Strahlung detektiert werden kann, festlegt. Die Geometrie der Schlitzblende 26 bestimmt somit die Schnittebene innerhalb des (dicken) Präparates, aus der Fluoreszenz-Strahlung detektiert wird.

Der Schlitzblende 26 ist noch ein Blockfilter 27 nachgeordnet, das unerwünschte, in das Detektormodul 5 gelangte Anregungsstrahlung abblockt. Die derart abseparierte, aus einem bestimmten Tiefenabschnitt stammende, zeilenförmig aufgefächerte Strahlung wird dann von einem geeigneten Detektor 28 analysiert. Analog zum geschilderten Farbkanal ist auch der zweite spektrale Detektionskanal aufgebaut, der ebenfalls eine Schlitzblende 26a, ein Blockfilter 27a sowie einen Detektor 28a umfaßt.

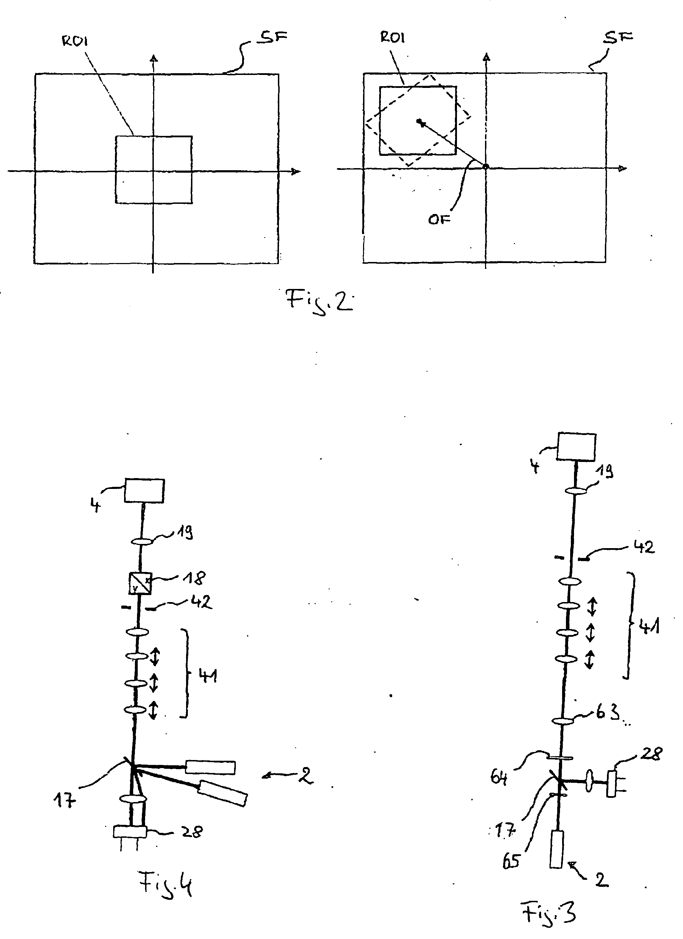

Die Verwendung einer konfokalen Schlitz-Apertur im Detektormodul 5 ist nur beispielhaft. Natürlich kann auch ein Einzelpunktscanner realisiert sein. Die Schlitzblenden 26, 26a sind dann durch Lochblenden ersetzt und die Strahlformungseinheit kann entfallen. Im übrigen sind für eine solche Bauweise alle Optiken rotationssymmetrisch ausgeführt. Dann können natürlich statt einer Einzelpunktabtastung und -detektion auch prinzipiell beliebige Mehrpunktanordnungen, wie Punktwolken oder Nipkow-Scheibenkonzepte, verwendet werden, wie sie später noch anhand Fig. 3 und 4 erläutert werden. Wesentlich ist dann allerdings, daß der Detektor 28 ortsauflösend ist, da eine parallele Erfassung mehrerer Probenpunkte beim Durchlauf des Scanners erfolgt.

In Figur 1 ist zu sehen, daß die nach den beweglichen, d.h. verschieblichen Kollimatoren 12 und 13 vorliegenden Gauß'schen Strahlenbündel über eine Spiegeltreppe in Form der Strahlvereinigungsspiegel 14, 16 vereinigt und bei der gezeigten Bauweise mit konfokaler Schlitzblende anschließend in ein Strahlbündel mit rechteckigem Strahlquerschnitt konvertiert werden. In der Ausführungsform der Figur 1 wird in der Strahlformungseinheit ein Zylinderteleskop 37 verwendet, dem eine Asphäreneinheit 38 nachgeordnet ist, auf das eine Zylinderoptik 39 folgt.

Nach der Umformung liegt ein Strahl vor, der in einer Profilebene im wesentlichen ein rechteckiges Feld ausleuchtet, wobei die Intensitätsverteilung entlang der Feldlängsachse nicht gaußförmig, sondern kastenförmig ist.
Die Beleuchtungsanordnung mit der Asphäreneinheit 38 kann zur gleichmäßigen Füllung einer Pupille zwischen einer Tubuslinse und einem Objektiv dienen. Damit kann die optische Auflösung des Objektivs voll ausgeschöpft werden. Diese Variante ist somit auch zweckmäßig in einem Einzelpunkt oder Multipunkt scannenden Mikroskopsystem, z. B. in einem linienscannenden System (bei letzterem zusätzlich zu der Achse, in der auf bzw. in die Probe fokussiert wird).

Die z. B. linienförmig konditionierte Anregungsstrahlung wird auf den Hauptfarbteiler 17 gelenkt. Dieser ist in einer bevorzugten Ausführungsform als spektral-neutraler Teilerspiegel gemäß der DE 10257237 A1 ausgeführt, deren Offenbarungsgehalt hier vollumfänglich einbezogen ist. Der Begriff "Farbteiler" umfaßt also auch nichtspektral wirkende Teilersysteme. Anstelle des beschriebenen spektral unabhängigen Farbteilers kann auch ein homogener Neutralteiler (z.B. 50/50, 70/30, 80/20 o.ä.) oder ein dichroitischer Teiler Verwendung finden. Damit applikationsabhängig eine Auswahl möglich ist, ist der Hauptfarbteiler vorzugsweise mit einer Mechanik versehen, die einen einfachen Wechsel ermöglicht, beispielsweise durch ein entsprechendes Teilerrad, das einzelne, austauschbare Teiler enthält.

Ein dichroitischer Hauptfarbteiler ist besonders dann vorteilhaft, wenn kohärente, d. h. gerichtete Strahlung detektiert werden soll, wie z.B. Reflexion, Stokes'sche bzw. anti-Stokes'sche Raman-Spektroskopie, kohärente Raman-Prozesse höherer Ordnung, allgemein parametrische nicht-lineare optische Prozesse, wie Second Harmonic Generation, Third Harmonic Generation, Sum Frequency Generation, Zwei- und Mehrphotonenabsorption bzw. Fluoreszenz. Mehrere dieser Verfahren der nicht-linearen optischen Spektroskopie erfordern den Einsatz zweier oder mehrer Laserstrahlen, die kollinear überlagert werden. Hierbei erweist sich die dargestellte Strahlvereinigung der Strahlung mehrerer Laser als besonders vorteilhaft. Grundsätzlich können die in der Fluoreszenzmikroskopie weitverbreiteten dichroitischen Strahlteiler verwendet werden. Auch ist es für Raman-Mikroskopie vorteilhaft vor den Detektoren holographische Notch-Teiler oder -Filter zu Unterdrückung des Rayleigh-Streuanteils zu verwenden.

In der Ausführungsform der Figur 1 wird die Anregungsstrahlung bzw. Beleuchtungsstrahlung dem Scanner 18 über eine motorisch steuerbare Zoom-Optik 41 zugeführt. Damit kann der Zoom-Faktor angepaßt werden und das abgetastete Sehfeld ist in einem bestimmten Verstellbereich kontinuierlich variierbar. Besonders vorteilhaft ist eine Zoom-Optik, bei der während Anpassung der Fokuslage und des Abbildungsmaßstabes die Pupillenlage im kontinuierlichen Durchstimmvorgang erhalten bleibt. Die in Figur 1 dargestellten, durch Pfeile symbolisierten, drei motorischen Freitheitsgrade der Zoom-Optik 41 entsprechen genau der Zahl der Freitheitsgrade, die zur Anpassung der drei Parameter, Abbildungsmaßstab, Fokus-, Pupillenlage, vorgesehen sind. Besonders bevorzugt ist eine Zoom-Optik 41, an deren ausgangsseitigen Pupille eine feste Blende 42 angeordnet ist. In einer praktischen einfachen Realisierung kann die Blende 42 auch durch die Begrenzung der Spiegelfläche des Scanners 18 vorgegeben sein. Die ausgangsseitige Blende 42 mit der Zoom-Optik 41 erreicht, daß unabhängig vom Verstellen der Zoomvergrößerung immer ein festgelegter Pupillendurchmesser auf das Scanobjektiv 19 abgebildet wird. Somit bleibt die Objektivpupille auch bei beliebiger Verstellung der Zoomoptik 41 vollständig ausgeleuchtet. Die Verwendung einer eigenständigen Blende 42 verhindert vorteilhaft das Auftreten ungewollter Streustrahlung im Bereich des Scanners 18.

Mit der Zoom-Optik 41 wirkt das Zylinderteleskop 37 zusammen, das ebenfalls motorisch betätigbar ist und der Asphäreneinheit 38 vorgeordnet ist. Dies ist in der Ausführungsform der Figur 2 aus Gründen eines kompakten Aufbaus gewählt, muß aber nicht so sein.

Wird ein Zoom-Faktor kleiner 1,0 gewünscht, wird das Zylinderteleskop 37 automatisch in den optischen Strahlengang eingeschwenkt. Es verhindert, daß die Aperturblende 42 unvollständig ausgeleuchtet ist, wenn das Zoomobjektiv 41 verkleinert ist. Das einschwenkbare Zylinderteleskop 37 gewährleistet somit, daß auch bei Zoom-Faktoren kleiner 1, d. h. unabhängig von der Verstellung der Zoomoptik 41 am Ort der Objektivpupille stets eine Beleuchtungslinie konstanter Länge vorliegt. Im Vergleich zu einem einfachen Sehfeld-Zoom sind somit Laserleistungsverluste in dem Beleuchtungsstrahl vermieden.

Da beim Einschwenken des Zylinderteleskops 37 ein Bildhelligkeitssprung in der Beleuchtungslinie unvermeidlich ist, ist in der (nicht dargestellten) Steuereinheit vorgesehen, daß die Vorschubgeschwindigkeit des Scanners 18 oder ein Verstärkungsfaktor der Detektoren im Detektormodul 5 bei aktiviertem Zylinderteleskop 37 entsprechend angepaßt ist, um die Bildhelligkeit konstant zu halten.

Neben der motorisch angetriebenen Zoomoptik 41 sowie dem motorisch aktivierbaren Zylinderteleskop 37 sind auch im Detektormodul 5 des Laserscanningmikroskops der Figur 1 fernsteuerbare Justierelemente vorgesehen. Zur Kompensation von Farblängsfehlern sind beispielsweise vor der Schlitzblende eine Rundoptik 44 sowie eine Zylinderoptik 39 und unmittelbar vor dem Detektor 28 eine Zylinderoptik 39 vorgesehen, die jeweils in axialer Richtung motorisch verschiebbar sind.

Zusätzlich ist zur Kompensation eine Korrektureinheit 40 vorgesehen, die nachfolgend kurz beschrieben wird.

Die Schlitzblende 26 bildet zusammen mit einer vorgeordneten Rundoptik 44 sowie der ebenfalls vorgeordneten ersten Zylinderoptik 39 sowie der nachgeordneten zweiten Zylinderoptik ein Pinhole-Objektiv der Detektoranordnung 5, wobei das Pinhole hier durch die Schlitzblende 26 realisiert ist. Um eine unerwünschte Detektion von im System reflektierter Anregungsstrahlung zu vermeiden, ist der zweiten Zylinderlinse 39 noch das Blockfilter 27 vorgeschaltet, das über geeignete spektrale Eigenschaften verfügt, um lediglich gewünschte Fluoreszenzstrahlung zum Detektor 28, 28a gelangen zu lassen.

Ein Wechsel des Farbteilers 25 oder des Blockfilters 27 bringt unvermeidlich einen gewissen Kipp- oder Keilfehler bei Einschwenken mit sich. Der Farbteiler kann einen Fehler zwischen Probenbereich und Schlitzblende 26, das Blockfilter 27 einen Fehler zwischen Schlitzblende 26 und Detektor 28 nach sich ziehen. Um zu verhindern, daß dann eine Neujustierung der Lage der Schlitzblende 26 bzw. des Detektors 28 erforderlich ist, ist zwischen der Rundoptik 44 und der Schlitzblende 26, d.h. im Abbildungsstrahlengang zwischen Probe und Detektor 28 eine planparallele Platte 40 angeordnet, die unter Steuerung eines Controllers in verschiedene Kippstellungen gebracht werden kann. Die planparallele Platte 40 ist dazu in einer geeigneten Halterung verstellbar angebracht.

Figur 2 zeigt, wie mit Hilfe der Zoom-Optik 41 innerhalb des zur Verfügung stehenden maximalen Scanfeldes SF ein Bereich (region of interest) ROI ausgewählt werden kann. Beläßt man die Ansteuerung des Scanners 18 so, daß die Amplitude sich nicht verändert, wie dies beispielsweise bei Resonanz-Scanner zwingend erforderlich ist, bewirkt eine an der Zoom-Optik eingestellte Vergrößerung größer 1,0 eine Einengung des ausgewählten Bereiches ROI zentriert um die optische Achse des Scanfeldes SF.

Resonanzscanner sind beispielsweise in Pawley, Handbook of Biological Confocal Microscopy , Plenum Press 1994, Seite 461ff beschrieben.

Steuert man den Scanner so an, daß er ein Feld asymmetrisch zur optischen Achse, d. h. zur Ruhelage der Scannerspiegel abtastet, so erhält man im Zusammenhang mit einer Zoomwirkung eine Offsetverschiebung OF des ausgewählten Bereiches ROI. Durch die bereits erwähnte Wirkung des Scanners 18, zu descannen, und durch den nochmaligen Durchlauf durch die Zoom-Optik 41, wird die Auswahl des interessierenden Bereiches ROI im Detektionsstrahlengang wieder in Richtung auf den Detektor hin aufgehoben. Somit kann man eine beliebige innerhalb des Scanbildes SF liegende Auswahl für den Bereich ROI treffen. Zusätzlich kann man für verschiedene Auswahlen des Bereiches ROI Bilder gewinnen und diese dann zu einem hochauflösenden Bild zusammensetzen.

Möchte man den ausgewählten Bereich ROI nicht nur um einen Offset OF gegenüber der optischen Achse verschieben, sondern auch zusätzlich drehen, ist eine Ausführungsform zweckmäßig, die in einer Pupille des Strahlenganges zwischen Hauptfarbteiler 17 und Probe 23 ein Abbe-König-Prisma vorsieht, das bekanntermaßen eine Bildfelddrehung zur Folge hat. Auch diese wird in Richtung auf den Detektor hin wieder aufgehoben. Nun kann man Bilder mit verschiedenen Offsetverschiebungen OF und verschiedenen Drehwinkeln messen und anschließend zu einem hochauflösenden Bild verrechnen, beispielsweise gemäß einem Algorithmus, wie er in der Veröffentlichung, Gustafsson, M., "Doubling the lateral resolution of wide-field fluorescence microscopy using structured illumination", in "Three-dimensional and multidimensional microscopy: Image acquisition processing VII", Proceedings of SPIE, Vol. 3919 (2000), p 141-150, beschrieben ist.

Figur 3 zeigt eine weitere mögliche Bauweise für ein Laserscanningmikroskop 1, bei dem ein Nipkowscheiben-Ansatz zur Verwirklichung kommt. Das Lichtquellenmodul 2, das in Figur 3 stark vereinfacht dargestellt ist, beleuchtet über ein Minilinsenarray 65 durch den Hauptfarbteiler 17 hindurch eine Nipkow-Scheibe 64, wie sie beispielsweise in US 6.028.306, WO 88 07695 oder DE 2360197 A1 beschrieben ist. Die über das Minilinsenarray 65 beleuchteten Pinholes der Nipkow-Scheibe werden in die im Mikroskopmodul 4 befindliche Probe abgebildet. Um auch hier die probenseitige Bildgröße variieren zu können, ist wiederum die Zoom-Optik 41 vorgesehen.

In Abwandlung zur Bauweise der Figur 1 ist beim Nipkow-Scanner die Beleuchtung im Durchgang durch den Hauptfarbteiler 17 vorgenommen und die zu detektierende Strahlung wird ausgespiegelt. Darüber hinaus ist in Abwandlung zu Figur 2 der Detektor 28 nun ortsauflösend ausgeführt, damit die mit der Nipkow-Scheibe 64 erreichte Multipunktbeleuchtung auch entsprechend parallel abgetastet wird. Ferner ist zwischen der Nipkow-Scheibe 64 und der Zoom-Optik 41 eine geeignete feststehende Optik 63 mit positiver Brechkraft angeordnet, welche die durch die Pinholes der Nipkow-Scheibe 64 divergent austretende Strahlung in geeignete Bündeldurchmesser umwandelt. Der Hauptfarbteiler 17 ist für den Nipkow-Aufbau der Figur 3 ein klassischer dichroitischer Strahlteiler, d. h. nicht der zuvor erwähnte Strahlteiler mit schlitzförmig oder punktförmig reflektierendem Bereich.

Die Zoom-Optik 41 entspricht der zuvor erläuterten Bauweise, wobei natürlich der Scanner 18 durch die Nipkow-Scheibe 64 überflüssig wird. Er kann dennoch vorgesehen werden, wenn man die anhand Figur 2 erläuterte Auswahl eines Bereiches ROI vornehmen möchten. Gleiches gilt für das Abbe-König-Prisma.

Einen alternativen Ansatz mit Multipunktabtastung zeigt in schematischer Darstellung Figur 4, bei der mehrere Lichtquellen schräg in die Scannerpupille einstrahlen. Auch hier läßt sich durch Nutzung der Zoom-Optik 41 zur Abbildung zwischen Hauptfarbteiler 17 und Scanner 18 eine Zoomfunktion wie in Figur 2 dargestellt realisieren. Durch gleichzeitiges Einstrahlen von Lichtbündeln unter verschiedenen Winkeln in einer zur Pupille konjugierten Ebene, werden Lichtpunkte in einer zur Objektebene konjugierten Ebene erzeugt, die vom Scanner 18 gleichzeitig über einen Teilbereich des gesamten Objektfeldes geführt werden. Die Bildinformation entsteht durch Auswertung sämtlicher Teilbilder auf einem ortsauflösenden Matrixdetektor 28.

Als weitere Ausführungsform kommt eine Multipunkt-Abtastung, wie in US 6.028.306 beschrieben, in Frage, deren Offenbarung vollumfänglich diesbezüglich hier einbezogen wird. Auch hier ist ein ortsauflösender Detektor 28 vorzusehen. Die Probe wird dann durch eine Multipunktlichtquelle beleuchtet, die durch einen Strahlexpander mit nachgeordneten Mikrolinsenarray realisiert wird, das eine Multiaperturenplatte so beleuchtet, daß dadurch eine Multipunktlichtquelle realisiert ist.

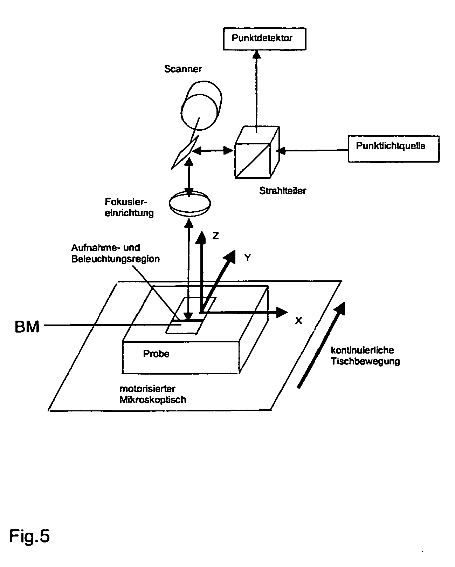

Fig. 5 zeigt eine Abtastung einer großen Probe mit einem (xly)-Punktscanner, einer Punktlichtquelle und einem Punktdetektor über eine Fokussiervorrichtung.

Die Bildaufnahme/ Beleuchtungsregion BM der zeilenweise erfolgenden Punktabtastung wird in x-Richtung von den Scannerparametern und der verwendeten Optik bestimmt. In y-Richtung geht sie über das normale Scanfeld eines Punktscanners hinaus, das durch einen entsprechenden y-Scanner begrenzt wäre und hier von dem kontinuierlichen y-Antrieb des Tisches ersetzt wird.

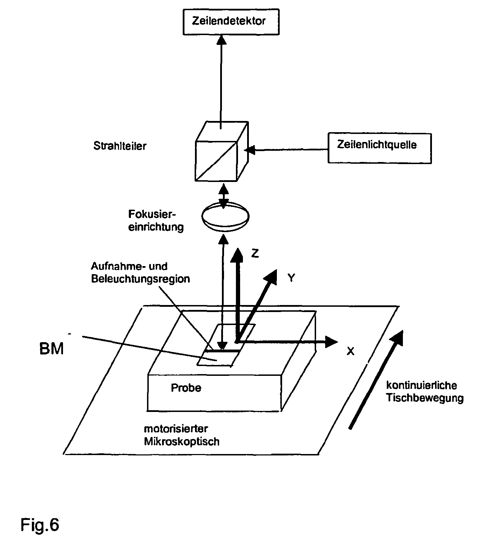

In Fig. 6 wird eine zeilenförmige Lichtquelle gemäß Fig. 1 auf die Probe abgebildet und der Tisch wiederum in Y Richtung verschoben.

Ein 3-dimensionales Koordinatensystem sei so festgelegt, daß die z-Achse in Richtung der optischen Achse des Mikroskops verläuft. Die x- und y-Achsen verlaufen orthogonal zur z-Achse. Ihre genaue Richtung ist für die Beschreibung des Verfahrens nicht relevant.

Bei dem erfindungsgemäßen Verfahren werden zur Aufnahme der Gesamtregion Daten entlang einer Zeile in x-Richtung aufgenommen. Der Mikroskoptisch wird in Richtung der y-Achse mit konstanter Geschwindigkeit verfahren. Die aufgenommenen Daten der Einzelzeilen werden in der Reihenfolge, in der sie aufgenommen wurden, in benachbarte Zeilen eines Bildspeichers kopiert.

Durch Wiederholung dieses Vorgangs an unterschiedlichen y-Positionen in der Probe kann ein Bild erzeugt werden, das sowohl in x- als auch in y-Richtung größer ist, als das maximale Bildfeld des Mikroskops.

Für eine Aufnahme großer Stapel wird die Aufnahmezeile zusätzlich periodisch in x-Richtung verschoben.

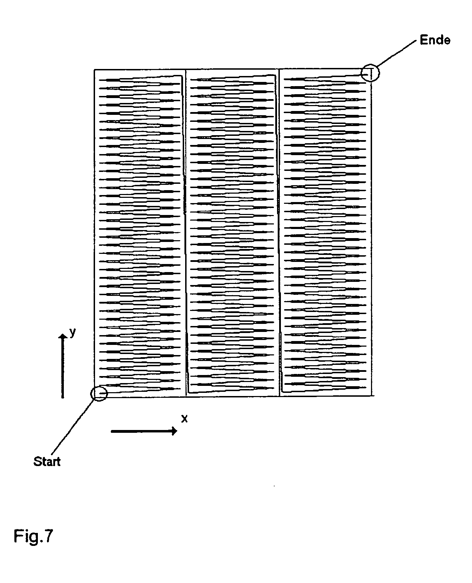

Die Kurve, die ein der Laserspot in der Probe bei einem Punktscanner abfährt, ist in Fig. 7 dargestellt. Dies ist sinngemäß auf einen Linienscanner übertragbar.

Im folgenden sei unter einem Bildstreifen der Bildausschnitt gemeint, für den Bilddaten bei gleicher x-Position des Tischs aufgenommen werden. Die x-Position für der linken aufgenommenen Streifen würde beispielsweise jeweils an der Position des Startpunktes liegen. Die Abbildung zeigt drei Bildstreifen in unterschiedlichen x-(Start-) Positionen .

Die Abspeicherung kann entweder direkt in einem Ergebnisbildspeicher oder aber in Zwischenspeichern für die einzelnen Bildstreifen erfolgen. Im letzteren Fall werden die Bildstreifen dann in den Ergebnisbildspeicher an die Stelle, die der Aufnahmeposition entspricht, gespeichert.

Bei Ungenauigkeiten der Tischbewegung in x-und y-Richtung kann es zu sichtbaren Verfälschungen an den Stoßstellen der Bildstreifen kommen. Um dies zu vermeiden, kann die Aufnahme der Bildstreifen überlappend erfolgen. Anschließend werden aus den Bildinformationen im Überlappungsbereich anhand von charakteristischen Bildmerkmalen durch einen Bildvergleich oder Korrelation die realen relativen Tischpositionen der Bildstreifen bestimmt und die Bildstreifen entsprechend verschoben in den Ergebnisspeicher kopiert. In diesem Fall werden Zwischenspeicher für Bildstreifen benötigt. Im Minimum kommt man mit einem Zwischenspeicher für einen Bildstreifen aus. Die Bestimmung der realen relativen Tischpositionen kann über Kreuzkorrelation erfolgen.

Eine mögliche Abfolge der Aufnahme bei Korrektur bezüglich der realen Tischposition ist:
1. Aufnahme des ersten Bildtreifen mit Abspeichern im Zwischenspeicher.
2. Kopieren des Bildstreifen aus dem Zwischenspeicher in den Ergebnisbildspeicher.
3. Bewegung des Tischs in x-Richtung
4. Aufnahme des nächsten Bildstreifen.
5. Bestimmung der realen relativen Tischposition aus den Bilddaten des Überlappungsbereichs aus Zwischenspeicher und Ergebnisbildspeicher.
6. Kopieren des Bildstreifen aus dem Zwischenspeicher in den Ergebnisbildspeicher an die Position, die der bestimmten Tischposition entspricht.
7. Wenn alle Bildstreifen aufgenommen wurden, wird die Aufnahme beendet, sonst wird die Aufnahme bei Schritt 3 fortgesetzt.

## Patentansprüche

1. Verfahren zur Lichtrastermikroskopie mit einer zumindest eindimensionalen Lichtverteilung zur Beleuchtung einer Probe in einem örtlich begrenzten Rasterfeld, und Detektormitteln zur Erfassung von Probenlicht sowie einem mindestens in einer Richtung beweglichen Probentisch, wobei
- wiederholt in verschiedenen Abtastregionen der Probe eine Beleuchtung der Probe, Detektion von Probenlicht und Aufzeichnung von Bilddaten erfolgt,
- die jeweilige Tischposition aufgezeichnet und die Aufzeichnung der jeweiligen Tischposition der Bilddatenaufzeichnung zugeordnet wird, wobei sich die Abtastregionen überlappen, **dadurch gekennzeichnet, daß**
- die Beleuchtung der Probe, die Detektion von Probenlicht und die Aufzeichnung von Bilddaten erfolgt, indem eine Bewegung des Probentisches mit konstanter Geschwindigkeit in einer ersten Richtung über die Abmessungen des Rasterfeldes hinaus ausgeführt wird und zugleich Bilddaten entlang einer zur ersten Richtung senkrecht liegenden zweiten Richtung verlaufenden Zeile aufgenommen werden,
- die Abtastregionen Bildstreifen sind,
- für einen ersten Bildstreifen Bilddaten aufgezeichnet, in einem Zwischenspeicher abgespeichert und dann in einen Ergebnisspeicher kopiert werden,
- der Probentisch in der zur ersten Richtung senkrecht liegenden zweiten Richtung bewegt wird,
- für einen zweiten, überlappenden Bildstreifen Bilddaten aufgenommen und im Zwischenspeicher abgelegt werden,
- eine reale relative Tischposition aus den Bilddaten des Überlappungsbereiches aus Zwischenspeicher und Ergebnisspeicher ermittelt wird und
- die Bilddaten des zweiten Bildstreifens aus dem Zwischenspeicher in den Ergebnisspeicher an eine Position kopiert werden, die der ermittelten realen Tischposition entspricht.

2. Verfahren nach Anspruch 1, wobei die Ermittlung der realen relativen Tischposition über eine Kreuzkorrelation erfolgt.

3. Verfahren nach Anspruch 1, wobei die Bilddaten der entlang der zweiten Richtung verlaufenden Zeile mittels einer Zeilenlichtquelle und einem Zeilendetektor aufgenommen werden.

4. Verfahren nach Anspruch 1, wobei die Bilddaten der entlang der zweiten Richtung verlaufenden Zeile mittel einer Punktlichtquelle, eines Punktdetektors und eines entlang der Zeile ablenkenden Scanners aufgenommen werden.

## Claims

1. Light scanning microscopy method using an at least one-dimensional light distribution for illuminating a sample in a locally defined grid field, detector means for the detection of sample light, and a sample table which is moveable at least in one direction, wherein
- repeatedly in different sensing areas of the sample illumination of the sample, detection of sample light, and recording of image data is effected,
- the respective table position is recorded and the record of the respective table position is assigned to the image data record, wherein the sensing areas overlap,
**characterized in that**
- the illumination of the sample, the detection of sample light, and the recording of image data is effected by conducting a movement of the sample table with constant speed in a first direction and beyond the dimensions of the grid field and by simultaneously recording image data along a second direction which is oriented perpendicular to the first direction,
- the sensing areas are image strips,
- image data of a first image strip are recorded, stored in a cache and are then copied into an output memory,
- the sample table is moved along the second direction which is oriented perpendicular to the first direction,
- image data are recorded for an overlapping second image strip and stored in the cache,
- a real relative table position is determined from the image data of the overlap region in the cache and the output memory, and
- the image data of the second image strip are copied from the cache into the output memory to a position which corresponds to the determined real table position.

2. Method according to claim 1, wherein the determining of the real relative table position is effected by means of a cross-correlation.

3. Method according to claim 1, wherein the image data of the line extending along the second direction are recorded by means of a line-type light source and a line-type detector.

4. Method according to claim 1, wherein the image data of the line extending along the second direction are recorded by means of a spot-type light source, a spot-type detector and a scanner deflecting along the line.

## Revendications

1. Procédé pour la microscopie optique à balayage avec une répartition au moins unidimensionnelle de la lumière destinée à éclairer un échantillon dans un champ de balayage localement limité, et des moyens de détection pour détecter la lumière de l'échantillon, ainsi qu'au moins un plateau pour échantillon, mobile au moins dans une direction, sachant que
- un éclairage de l'échantillon, la détection de la lumière de l'échantillon et l'enregistrement des données d'image sont effectués de manière répétée dans différentes zones de balayage de l'échantillon,
- la position respective du plateau est enregistrée et l'enregistrement de la position respective du plateau est associé à l'enregistrement des données d'image, sachant que les zones de balayage se chevauchent,
**caractérisé en ce que**
- l'éclairage de l'échantillon, la détection de la lumière de l'échantillon et l'enregistrement des données d'image sont effectués alors que le plateau est déplacé à vitesse constante dans une première direction au-delà des dimensions du champ de balayage et, en même temps, des données d'image sont enregistrées sur une ligne qui s'étend le long d'une deuxième direction perpendiculaire à la première direction,
- les zones de balayage sont des bandes d'image,
- des données d'image sont enregistrées pour une première bande d'image, sont stockées dans une mémoire temporaire et sont copiées ensuite dans une mémoire de résultats,
- le plateau est déplacé dans la deuxième direction perpendiculaire à la première direction,
- des données d'image sont enregistrées pour une deuxième bande d'image chevauchante et sont stockées dans la mémoire temporaire,
- une position relative réelle du plateau est déterminée à partir des données d'image de la zone de chevauchement à partir de la mémoire temporaire et de la mémoire de résultats, et
- les données d'image de la deuxième bande d'image sont copiées à partir de la mémoire temporaire dans la mémoire de résultats à une position qui correspond à la position relative réelle du plateau.

2. Procédé selon la revendication 1, dans lequel la détermination de la position relative réelle du plateau est effectuée par l'intermédiaire d'une corrélation croisée.

3. Procédé selon la revendication 1, **caractérisé en ce que** les données d'image de la ligne qui s'étend le long de la deuxième direction sont enregistrées au moyen d'une source de lumière par lignes et d'un détecteur de lignes.

4. Procédé selon la revendication 1, dans lequel les données d'image de la ligne qui s'étend le long de la deuxième direction sont enregistrées au moyen d'une source de lumière par points, d'un détecteur de points et d'un scanner balayant le long de la ligne.
